# EUROPEAN PATENT APPLICATION

(11) **EP 3 594 387 A1**
(43) Date of publication of application: **15.01.2020**
(21) Application number: 19182539.7
(22) Date of filing: 26.06.2019
(51) Int. Cl.: D03J 1/00

(54) **STOP-MARK INSPECTION APPARATUS FOR LOOM**

(30) Priority: 12.07.2018 JP 2018131980
(71) Applicant: Kabushiki Kaisha Toyota Jidoshokki, Kariya-shi, Aichi 448-8671 (JP)
(72) Inventor: SUZUKI, Akihiro, Kariya-shi,, Aichi 448-8671 (JP); MATSUI, Tadasumi, Kariya-shi,, Aichi 448-8671 (JP); TSUJI, Ryohei, Kariya-shi,, Aichi 448-8671 (JP)
(74) Representative: TBK

(57) **Abstract**

The stop-mark inspection apparatus (17, 50) for a loom (10) includes a camera device (18) having a camera main body (19) photographing a woven fabric (W), and is configured to inspect for presence or absence of a stop mark in the woven fabric (W) through image analysis of a photographed image. The camera device (18) is placeable on a surface of the woven fabric (W), and includes a support frame (20) supporting the camera main body (19), an illumination light (25) adjusting illuminance of a photographing area (E) of the camera main body (19), and a plate member (35, 52) provided at a bottom of the support frame (20) so that the plate member (35, 52) is contactable with the surface of the woven fabric (W). The plate member (35, 52) includes a positioning mark (42, 43, 56, 57) extending in a transverse direction of the photographing area (E) of the camera main body (19).

## Description

### BACKGROUND ART

The present disclosure relates to a stop-mark inspection apparatus for a loom that inspects for a stop mark that may be formed in a woven fabric when the loom stops its operation.

As an example of a known art of a stop-mark inspection apparatus for a loom, Japanese Patent Application Publication No. 2000-290861 discloses a woven-fabric inspection apparatus for a loom. In the woven-fabric inspection apparatus disclosed in the above Publication, a guide rail is fixed to a first leg and a second leg so that the guide rail is disposed above a woven fabric, in parallel with, and in a width direction of the woven fabric. A camera main body is retained on a carriage that is movably provided on the guide rail. The camera main body magnifies and photographs the woven fabric. Then, an image photographed with the camera main body is displayed on a monitor screen for a visual inspection to detect a failure. To determine whether the camera main body appropriately photographs the woven fabric, the image displayed on the monitor screen is checked. A handle provided to the carriage is used to move the camera main body.

However, according to the woven-fabric inspection apparatus disclosed in the above Publication, an operator needs to check the image on the monitor screen to determine whether the camera main body appropriately photographs the woven fabric. Operating the handle to adjust a position of the camera main body while checking the image on the monitor screen is complicated and inefficient.

The present disclosure has been made in view of the above circumstances and is directed to providing a stop-mark inspection apparatus for a loom, which allows photographing a woven fabric appropriately without checking a photographed image.

### SUMMARY

In accordance with an aspect of the present disclosure, there is provided a method and an apparatus of a stop-mark inspection for a loom. The stop-mark inspection apparatus for the loom includes a camera device having a camera main body photographing a woven fabric, and is configured to inspect for presence or absence of a stop mark in the woven fabric through image analysis of a photographed image. The camera device is placeable on a surface of the woven fabric, and includes a support frame supporting the camera main body, an illumination light adjusting illuminance of a photographing area of the camera main body, and a plate member provided at a bottom of the support frame so that the plate member is contactable with the surface of the woven fabric. The plate member includes a positioning mark extending in a transverse direction of the photographing area of the camera main body.

Other aspects and advantages of the disclosure will become apparent from the following description, taken in conjunction with the accompanying drawings, illustrating by way of example the principle of the disclosure.

### BRIEF DESCRIPTION OF THE DRAWINGS

The disclosure, together with objects and advantages thereof, may best be understood by reference to the following description of the embodiments together with the accompanying drawings in which:
FIG. 1 is a schematic perspective view showing an air jet loom according to a first embodiment of the present disclosure;
FIG. 2 is a schematic view showing a stop-mark inspection apparatus for the air jet loom according to the first embodiment;

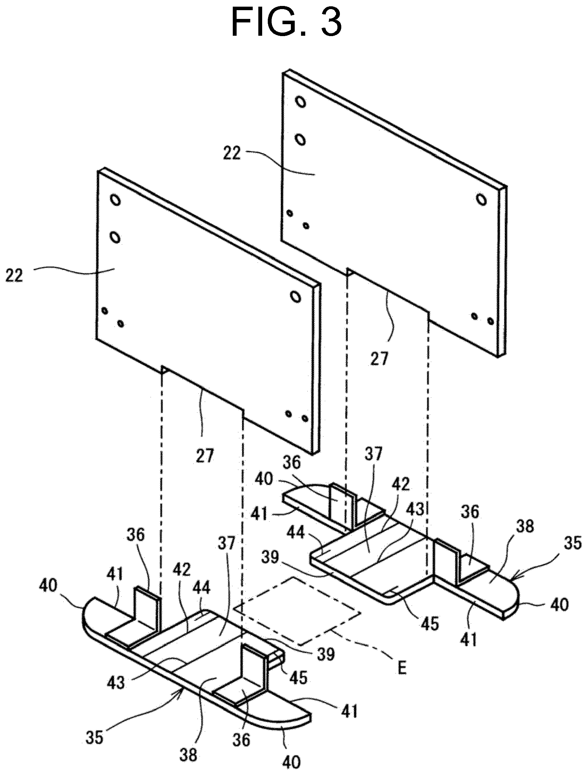

FIG. 3 is an exploded perspective view showing major components of the stop-mark inspection apparatus for the air jet loom according to the first embodiment;
FIG. 4 is a plan view of a plate member included in the stop-mark inspection apparatus according to the first embodiment;
FIG. 5A is a plan view showing a part of a woven fabric to inspect for a heavy-filling bar and a light-filling bar according to the first embodiment;
FIG. 5B is a plan view showing major components of a camera device positioned with a weaving-resuming weft thread according to the first embodiment;
FIG. 6A is a plan view showing a part of the woven fabric to inspect for a wavy set mark according to the first embodiment;
FIG. 6B is a plan view showing major components of the camera device positioned with the weaving-resuming weft thread according to the first embodiment;
FIG. 7 is a schematic partially-exploded view showing a stop-mark inspection apparatus for an air jet loom according to a second embodiment of the present disclosure; and
FIG. 8 is a plan view of a plate member included in the stop-mark inspection apparatus according to second the embodiment.

### DETAILED DESCRIPTION OF THE EMBODIMENTS

### [First embodiment]

A method of a stop-mark inspection for a loom and a stop-mark inspection apparatus for a loom according to a first embodiment of the present disclosure will be described with reference to the accompanying drawings. First, the loom according to the first embodiment will be described. The loom according to the first embodiment is an air jet loom.

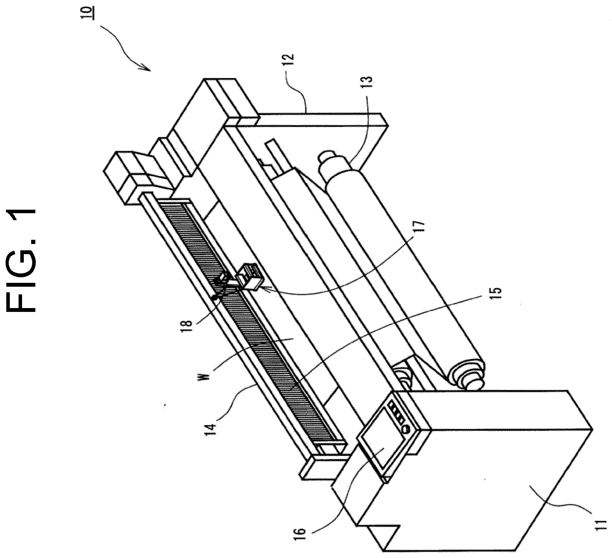

As shown in FIG. 1, an air jet loom 10 includes a pair of left and right side frames 11 and 12. The pair of the left and right side frames 11 and 12 is connected via a plurality of cross rails (not shown). The air jet loom 10 includes a warp beam (not shown) on which the warp is wound and a cloth roll 13 on which a woven fabric W is to be wound. The warp beam constitutes a part of a let-off apparatus letting off the warp, and the cloth roll 13 constitutes a part of a take-up apparatus taking up the woven fabric W.

A top rail 14 is provided at an upper portion of the air jet loom 10. Beneath the top rail 14, a reed 15 is provided to beat a thread of the weft that is inserted into the shed between raised and lowered threads of the warp. On the left side frame 11 disposed at the left end of the air jet loom 10, a function panel 16 is provided to check an operation status of the air jet loom 10 and to operate the air jet loom 10. FIG. 1 omits showing the let-off apparatus including the warp beam, a weft insertion apparatus including a weft insertion nozzle, and a shedding apparatus including a heddle frame.

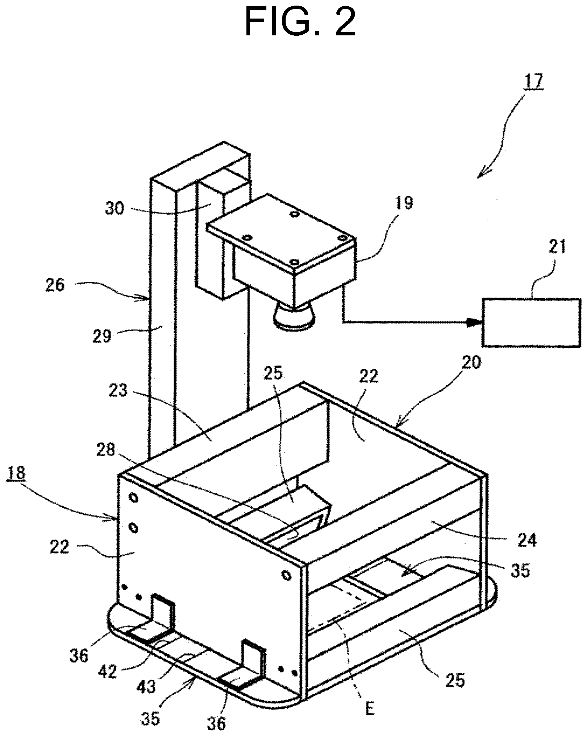

As shown in FIG. 2, a stop-mark inspection apparatus 17 according to the first embodiment of the present disclosure includes a camera device 18 configured independently from the air jet loom 10. To use the stop-mark inspection apparatus 17, the camera device 18 is placed on the surface of the woven fabric W in front of the reed 15 as shown in FIG. 1. The camera device 18 placeable on the surface of the woven fabric W includes a camera main body 19 serving as a photographing device and a support frame 20 supporting the camera main body 19.

The camera main body 19 is a known camera capable of photographing the woven fabric W such as a charge-coupled device (CCD) camera having a CCD image sensor. The camera main body 19 is connected to an image analyzing device 21 that is provided separately from the camera device 18. An image photographed by the camera main body 19 is output to the image analyzing device 21 from the camera main body 19, and then the photographed image output from the image analyzing device 21 is analyzed to inspect for the stop mark. The image analyzing device 21 may be connected to a display monitor (not shown) to display a result of the image analysis, or connected to the function panel 16 of the air jet loom 10.

The support frame 20 includes a pair of side wall plates 22, two beams 23 and 24 connecting the pair of side wall plates 22, a pair of illumination lights 25 provided below the two beams 23 and 24, and a post 26 fixed to the beam 23 i.e. one of the two beams and provided with the camera main body 19. The pair of side wall plates 22 is rectangular metal plates disposed in parallel with each other.

As shown in FIG. 2, the beam 23, i.e. the one of the two beams 23 and 24, is attached horizontally to portions around upper corners of the side wall plates 22 near the post 26. The beam 24, i.e. the other of the two beams, is horizontally attached to portions around upper corners of the side wall plates 22 away from the post 26. The beam 24, i.e. the other of the two beams, is smaller in thickness in a vertical direction than the beam 23, i.e. the one of the two beams. The beam 23, i.e. the one of the two beams, is located at a side nearer to the reed 15 whereas the beam 24, i.e. the other of the two beams, is located at a side nearer to the woven fabric take-up.

The illumination lights 25 are provided below the beams 23 and 24, respectively. The longitudinal direction of the illumination lights 25 is in the horizontal direction, and opposite ends of the illumination lights 25 in the longitudinal direction are fixed to the side wall plates 22 respectively. The pair of illumination lights 25 is in parallel with each other, and the sides thereof facing each other are illuminating devices 28. FIG. 2 shows one of the illuminating devices 28 of the illumination lights 25 at the side of the beam 23, i.e. the one of the two beams, but does not show the other of the illuminating devices 28 of the illumination lights 25 at the side of the beam 24, i.e. the other of the two beams. The illumination lights 25 illuminate a photographing area E of the camera main body 19, and the illuminance in the photographing area E is adjustable. The optical axis of each of the illuminating devices 28 is disposed in a slightly slanting downward direction. The illumination lights 25 serve as beams since the opposite ends of the two illumination lights 25 are fixed to the side wall plates 22.

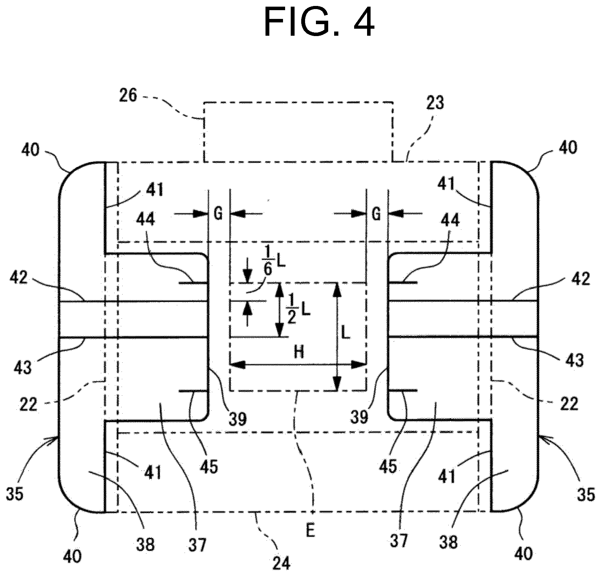

The post 26 includes a prism-shaped main body 29 and a connecting portion 30 to which the camera main body 19 is attached. The base of the main body 29 is fixed to the outer surface of the beam 23, i.e. the one of the beams, and the top end of the main body 29 comes above the base. The connecting portion 30 is provided to an inner surface of the top end portion of the main body 29 and supports the camera main body 19 in such a manner that a lens (not shown) of the camera main body 19 faces downward. As shown in FIG.4, the photographing area E of the camera main body 19 is set in an area surrounded by the pair of the side wall plates 22 of the support frame 20 and the pair of the illumination lights 25. A length of the photographing area E is denoted by L, and a width of the photographing area E is denoted by H. A length L is a dimension in parallel with a plate surface of the side wall plate 22, and the width H is a dimension orthogonal to the plate surface of the side wall plate 22. A transverse direction of the photographing area E is in parallel with a longitudinal direction of the beams 23 and 24.

At a bottom of the support frame 20, a pair of the plate members 35 is provided. The plate member 35 is made of a transparent acrylic plate. The plate members 35 are fixed to the side wall plates 22 by using fixing brackets 36. The plate members 35 are contactable with the woven fabric W.

Each of the plate member 35 includes an inner plate 37 located inside of the side wall plate 22 and an outer plate 38 located outside of the side wall plate 22. The inner plate 37 is rectangular, and a width thereof is smaller than a length of the side wall plate 22. The inner plate 37 extends from the side wall plate 22 toward the photographing area E. As shown in FIG. 4, a gap G is formed between the photographing area E and the inner plate 37. The gap G is formed at a position where the photographing area E is not excessively brightened by possible reflection of light from the illumination light 25 against an edge 39 of the inner plate 37 at a side near the photographing area E.

The outer plate 38 located to the outer side of the side wall plate 22 is formed elongated along the side wall plate 22. A length of the outer plate 38 is almost the same as the length of the side wall plate 22. The outer plate 38 has a chamfer 40 of which an outer corner is rounded. The plate member 35 is fixed to the side wall plate 22 in a state where a portion of the inner plate 37 at a side of the outer plate 38 enters a cut-out portion 27 of the side wall plate 22. Therefore, a lower edge of the side wall plate 22 is flush with a lower face of the plate member 35. An edge 41 of the outer plate 38 at a side of the side wall plate 22 contacts with the side wall plate 22. A location of the plate member 35 in relation to the side wall plate 22 is determined by fixing the plate member 35 to the side wall plate 22 in such a manner that the edge 41 contacts with an outer surface of the side wall plate 22.

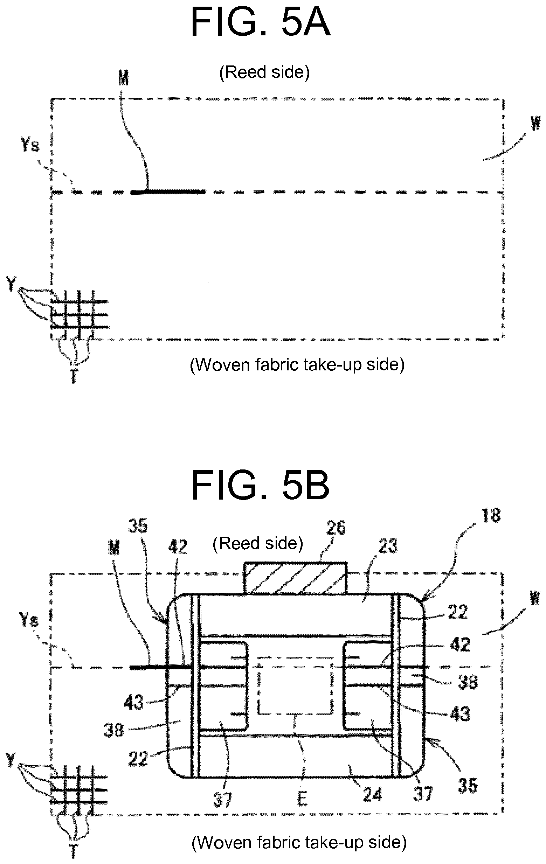

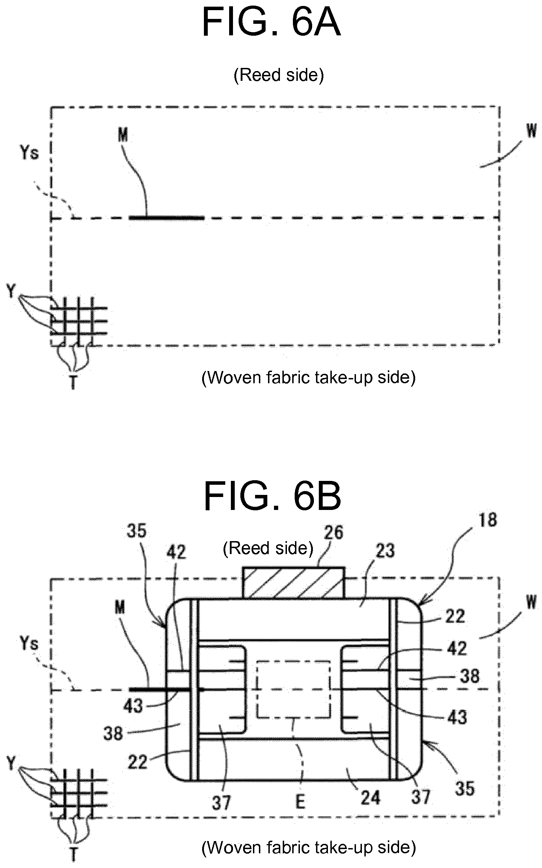

The plate member 35 according to the embodiment of the present disclosure includes positioning marks 42 and 43 used for positioning a weaving-resuming weft thread Ys in the woven fabric W to inspect for the stop mark. The weaving-resuming weft thread Ys as shown in FIGs. 5A and 6A is a thread of the weft Y of the woven fabric W inserted between threads of warp T when weaving is resumed after the stop in operation of the air jet loom 10. When weaving is resumed after the stop in operation of the air jet loom 10 by some cause, the stop mark may easily be formed. The stop mark has three types: a heavy-filling bar having a narrower pitch between the threads of the weft Y than the normal pitch, a light-filling bar having a broader pitch between the threads of the weft Y than the normal pitch, and a wavy set mark formed by a dislocated thread of the weft Y in a thickness direction.

A positioning mark 42 is a mark used for positioning the weaving-resuming weft thread Ys to inspect for the heavy-filling bar and the light-filling bar. The positioning mark 42 is formed on the surface of the plate member 35 across a border between the inner plate 37 and the outer plate 38. An extending direction of the positioning mark 42 is a direction orthogonal to the plate surface of the side wall plate 22, that is, a direction in parallel with a longitudinal direction of the beams 23 and 24. The positioning mark 42 extends in the transverse direction of the photographing area E of the camera main body 19. By aligning the positioning mark 42 with a weft direction during the inspection of the stop mark, the weft is prevented from being angled relative to a transverse direction in the photographing area E, which improves an accuracy in the stop-mark inspection. The positioning mark 42 is located at a position spaced by a sixth of the length L from an edge of the photographing area E at a side of the beam 23, i.e. the one of the beams, toward an edge of the photographing area E at a side of the beam 24, i.e. the other one of the beams. Positioning the weaving-resuming weft thread Ys with the positioning mark 42 enables an inspection for the heavy-filling bar and the light-filling bar.

A positioning mark 43 is a mark used for positioning the weaving-resuming weft thread Ys to inspect for the wavy set mark. The positioning mark 43 is formed on the surface of the plate member 35 across a border between the inner plate 37 and the outer plate 38. Like the positioning mark 42, an extending direction of the positioning mark 43 is a direction orthogonal to the plate surface of the side wall plate 22, that is, a direction in parallel with a longitudinal direction of the beams 23 and 24. Therefore, to inspect for the stop mark, the positioning mark 43 is allowed to extend in a direction of the weft Y in the woven fabric W. The positioning mark 43 is located at a position spaced by a half of the length L from the edge of the photographing area E at the side of the beam 23, i.e. the one of the beams, toward the edge of the photographing area E at the side of the beam 24, i.e. the other one of the beams. Positioning the weaving-resuming weft thread Ys with the positioning mark 43 enables an inspection for the wavy set mark.

The plate member 35 includes marks 44 and 45 indicating the photographing area E, in addition to the positioning marks 42 and 43. The mark 44 is a mark in parallel with the positioning marks 42 and 43 and located in an extending line of the edge of the photographing area E at the side of the beam 23, i.e. the one of the beams. The mark 45 is a mark in parallel with the positioning marks 42 and 43 and located in an extending line of the edge of the photographing area E at the side of the beam 24, i.e. the other one of the beams. The positioning marks 42 and 43 and the marks 44 and 45 are mark-off lines drawn with a scriber, and are brightly illuminated by the received light from the illumination light 25. In particular, the positioning marks 42 and 43 on the outer plate 38 are illuminated by light passing through the plate member 35, but not by light directly received from the illumination light 25, which prevents the positioning marks 42 and 43 from being illuminated excessively.

Now, the steps of inspecting the stop mark using the stop-mark inspection apparatus 17 will be described. According to the first embodiment, the stop mark is inspected by using the woven fabric W woven in a trial run. More specifically, the woven fabric W is inspected for the stop mark in a state after the air jet loom 10 under the trial run being stopped, resumed, and then stopped again.

First, an operator searches for the weaving-resuming weft thread Ys that is a thread of the weft Y of the woven fabric W inserted between the threads of the warp T when weaving is resumed after the stop in operation of the air jet loom 10. Then, the operator, as shown in FIGs. 5A and 6A, colors a part of the weaving-resuming weft thread Ys with a tool such as a pen to form a colored portion M in such a manner that a position of the weaving-resuming weft thread Ys is identified at sight.

Then, to inspect for the heavy-filling bar and the light-filling bar, the operator places the camera device 18 on the woven fabric W in such a manner that the weaving-resuming weft thread Ys coincides with the positioning mark 42 as shown in FIG. 5B. To inspect for the wavy set mark, the operator places the camera device 18 on the woven fabric W in such a manner that the weaving-resuming weft thread Ys coincides with the positioning mark 43 as shown in FIG. 6B. By placing the camera device 18 on the woven fabric W so as to bring the weaving-resuming weft thread Ys to coincide with the positioning mark 42 or 43, the photographing area E securely includes an area where the stop mark is not formed in the woven fabric W and an area where the stop mark may possibly be formed in the woven fabric W. The area where the stop mark is not formed in the woven fabric W is an area before the weaving-resuming weft thread Ys is inserted, and the area where the stop mark may possibly be formed in the woven fabric W is an area after the weaving-resuming weft thread Ys is inserted.

As shown in FIGs. 5B and 6B, positioning the weaving-resuming weft thread Ys with the positioning mark 42 or 43 goes smoothly by bringing the colored portion M of the weaving-resuming weft thread Ys to coincide with the positioning mark 42 or 43 on the outer plate 38, but in a state without including the colored portion M of the weaving-resuming weft thread Ys in the photographing area E because the photographing area E including the colored portion M of the weaving-resuming weft thread Ys may affect image analysis.

When positioning the weaving-resuming weft thread Ys with the positioning mark 42 or 43 is completed, the operator determines that it is a state ready for appropriately photographing the woven fabric W by using the camera main body 19, and thus the operator photographs the woven fabric W by using the camera main body 19. The photographed image is transferred to the image analyzing device 21. The image analyzing device 21 performs the image analysis of the photographed image to determine the presence or the absence of the stop mark.

In order to inspect for the presence or the absence of the heavy-filling bar or the light-filling bar of the stop mark, the photographed image is used to calculate the normal pitch between threads of the weft Y in an area woven before the weft insertion of the weaving-resuming weft thread Ys, and then an average pitch between threads of the weft Y in an area woven after weft insertion of the weaving-resuming weft thread Ys. The presence or the absence of the heavy-filling bar or the light-filling bar is determined by comparing the normal pitch with the average pitch calculated by the image analyzing device 21. Determination as to presence of the wavy set mark of the stop mark is based on the presence of a shade in the photographed image. For example, when the photographed image has a dark-shaded portion, the image analyzing device 21 determines that the wavy set mark exists.

Results of the stop-mark inspection obtained from the image analysis is displayed on the display monitor (not shown) connected to the image analyzing device 21, or displayed on the function panel 16. The operator adjusts the air jet loom 10 at relevant components based on the displayed results of the stop-mark inspection. It is preferable to perform the stop-mark inspection by changing the photographing area E in the woven fabric W in the weaving width direction several times.

The stop-mark inspection apparatus 17 for the air jet loom 10 according to the first embodiment of the present disclosure offer following operational effects.
(1) An operator stops the air jet loom 10 weaving after resumption after a stop, positions the weaving-resuming weft thread Ys in the woven fabric W with the positioning mark 42 or 43 on the plate member 35, and then brings the camera device 18 to be placed on the surface the woven fabric W. Aligning the positioning mark 42 or 43 with the weaving-resuming weft thread Ys prevents the weft Y from being angled relative to a transverse direction in the photographing area E so that the camera main body 19 appropriately photographs the woven fabric W. In this way, the woven fabric W is appropriately photographed without checking the image photographed by the camera main body 19, which reduces time for inspecting the stop mark, i.e., raises the efficiency in the stop-mark inspection.
(2) Because the plate member 35 is made from transparent materials, the weaving-resuming weft thread Ys is visible so that it is possible to confirm that the weaving-resuming weft thread Ys coincides with the positioning mark 42 or 43 on the plate member 35 even when the weaving-resuming weft thread Ys comes beneath the plate member 35. In this way, the stop-mark inspection apparatus according to the first embodiment facilitates positioning of the weaving-resuming weft thread Ys with the positioning mark 42 or 43.
(3) Because the positioning marks 42 and 43 are mark-off lines drawn on the plate member 35, the positioning mark 42 and 43 are brightly illuminated by the received light. Therefore, the positioning marks 42 and 43 are well visible even with a dark-colored woven fabric W. In particular, the positioning marks 42 and 43 on the outer plate 38 are illuminated by light passing through the plate member 35, but not by light directly received from the illumination light 25, which prevents the positioning marks 42 and 43 from being illuminated excessively. In this way, it is possible to confirm that the weaving-resuming weft thread Ys coincides with the positioning mark 42 or 43 on the plate member 35 even when the positioning mark 42 or 43 on the inner plate 37 is too bright by the received light to see.
(4) The positioning mark 42 and 43 are disposed at positions depending on the type of the stop mark. In the photographing area E of the camera main body 19, a position of the weaving-resuming weft thread Ys suitable for inspecting the wavy set mark of the stop mark and a position of the weaving-resuming weft thread Ys suitable for inspecting the heavy-filling and light-filling bars of the stop mark are different from each other. For this reason, by providing the positioning marks 42 and 43 at positions depending on the type of the stop mark, the inspection for the wavy set mark and the inspection for the heavy-filling and light-filling bars are performed efficiently.
(5) Because the plate members 35 at the bottom of the support frame 20 are disposed at both sides of the photographing area E in the weft direction, the plate member 35 does not require an opening that accommodates the photographing area E, which allows to downsize the plate member 35 comparing to a size of a plate member having an opening.
(6) The positioning marks 42 and 43 are formed across a border between the inner plate 37 and the outer plate 38. By aligning the positioning mark 42 or 43 on the outer plate 38 to position with the weaving-resuming weft thread Ys, the camera main body 19 appropriately photographs the woven fabric W without checking the inner plate 37. This may reduce an operation time required for the stop-mark inspection.
(7) Depending on the type of the woven fabric W, the photographing area E and the inner plate 37 may be excessively brightened by the illumination light 25, which may cause difficulty to identify the stop mark. In such a case, by aligning the positioning mark 42 or 43 on the outer plate 38 with the weaving-resuming weft thread Ys, an area containing the stop mark is securely taken into the photographing area E.
(8) Because the side wall plate 22 has the cut-out portion 27 that is cut out deeper than the thickness of the plate member 35, the plate member 35 is assembled with the side wall plate 22 in such a manner that the lower edge of the side wall plate 22 is flush with a back side of the plate member 35. Even when the thickness of the plate member 35 is changed, a certain distance is maintained between the camera main body 19 and the photographing area E without adjusting the distance from the camera main body 19 to the photographing area E, which improves workability of the stop-mark inspection.
(9) Because of the gap G formed between the edge 39 of the plate member 35 and the photographing area E, even when the illumination light 25 illuminates the photographing area E, the possible reflection of light from the illumination light 25 against the edge 39 does not affect the photographing area E. Therefore, the camera main body 19 appropriately photographs the woven fabric W without being affected by the reflection of light against the edge 39.

### [Second embodiment]

Now, a stop-mark inspection apparatus for a loom according to a second embodiment of the present disclosure will be described below. The second embodiment differs from the first embodiment in the configuration of the plate member. The configurations other than the plate member according to the second embodiment are the same as those according to the first embodiment. Therefore, the same reference numerals assigned to relative components as those used for the first embodiment are also used for the second embodiment.

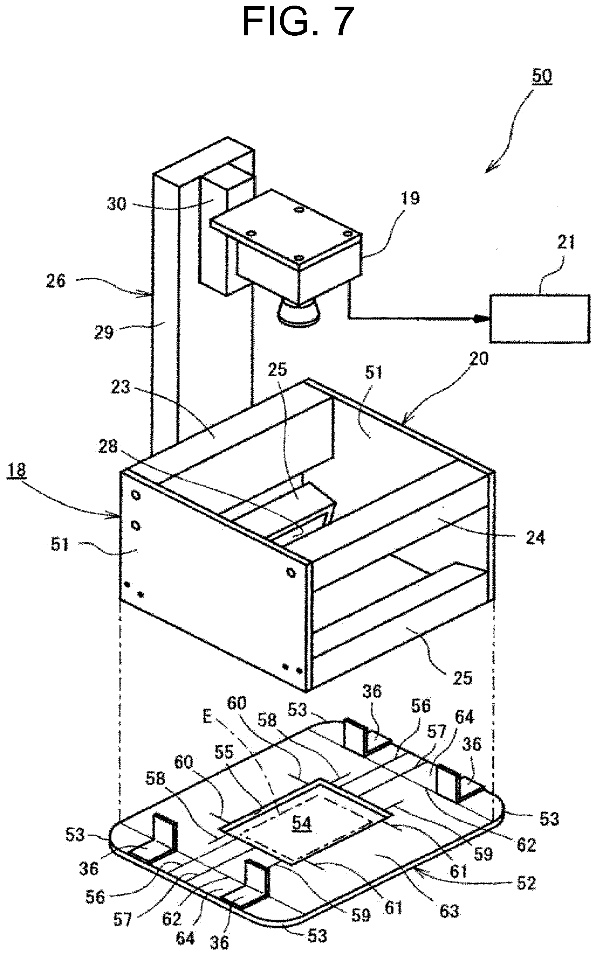

As shown in FIG. 7, in a stop-mark inspection apparatus 50 according to the second embodiment of the present disclosure, a pair of side wall plates 51 without cut-out portions constitutes a part of a support frame 20. Although a plate member 52 shown in FIG. 7 is in a state separated from the support frame 20, the plate member 52 is configured to be a bottom of the support frame 20. The plate member 52 is nearly rectangular, and fixed to the side wall plates 51 by using fixing brackets 36.

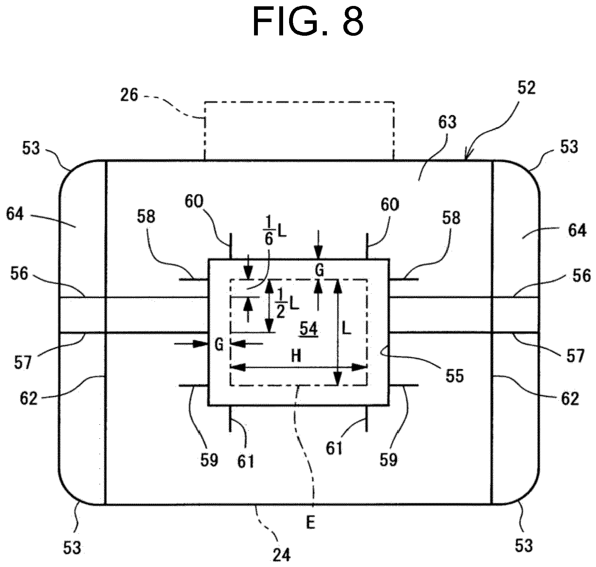

As shown in FIG. 8, the plate member 52 has a chamfer 53 of which an outer corner is rounded. The plate member 52 has an internal edge 55 forming an opening 54 that accommodates a photographing area E. The opening 54 is formed in the center of the plate member 52. The opening 54 has a size enough to accommodate the photographing area E. A gap G is formed between the internal edge 55 and the photographing area E. The gap G is formed at a position where the photographing area E is not excessively brightened by reflection of light from the illumination light 25 against the internal edge 55.

The plate member 52 has positioning marks 56 and 57. The positioning mark 56 is a mark used for positioning the weaving-resuming weft thread Ys to inspect for the heavy-filling bar and the light-filling bar. The positioning mark 56 is formed on and across the plate member 52 at both sides beyond the opening 54. An extending direction of the positioning mark 56 is a direction orthogonal to a plate surface of the side wall plate 51, that is, a direction in parallel with a longitudinal direction of beams 23 and 24. Therefore, to inspect for the stop mark, the positioning mark 56 is allowed to extend in the weft Y direction in the woven fabric W. The positioning mark 56 is located at a position spaced by a sixth of the length L from an edge of the photographing area E at a side of the beam 23, i.e. the one of the beams, toward an edge of the photographing area E at a side of the beam 24, i.e. the other one of the beams. Positioning the weaving-resuming weft thread Ys with the positioning mark 56 enables an inspection for a heavy-filling bar and a light-filling bar.

The positioning mark 57 is a mark used for positioning the weaving-resuming weft thread Ys during the inspection of a wavy set mark. The positioning mark 57 is formed on and across the plate member 52 at both sides beyond the opening 54. Like the positioning mark 56, an extending direction of the positioning mark 57 is a direction orthogonal to the plate surface of the side wall plate 51, that is, a direction in parallel with a longitudinal direction of beams 23 and 24. Therefore, to inspect for the stop mark, the positioning mark 57 is allowed to extend in the weft Y direction in the woven fabric W. The positioning mark 57 is located at a position distanced by a half of the length L from the edge of the photographing area E at the side of the beam 23, i.e. the one of the beams, toward the edge of the photographing area E at the side of the beam 24, i.e. the other one of the beams. Positioning the weaving-resuming weft thread Ys with the positioning mark 57 enables the inspection for the wavy set mark.

The plate member 52 includes marks 58, 59, 60, and 61 indicating the photographing area E, in addition to the positioning marks 56 and 57. The mark 58 is in parallel with the positioning marks 56 and 57 and located in an extending line of the edge of the photographing area E at the side of the beam 23, i.e. the one of the beams. The mark 59 is in parallel with the positioning marks 56 and 57 and located in an extending line of the edge of the photographing area E at the side of the beam 24, i.e. the other one of the beams.

The marks 60 are located at one side of extending lines of edges of the photographing area E orthogonal to the positioning marks 56 and 57 and in parallel with the plate surfaces of the side wall plates 51. The marks 61 are located at the other side of extending lines of edges of the photographing area E orthogonal to the positioning marks 56 and 57 and in parallel with the plate surfaces of the side wall plates 51.

The plate member 52 has a pair of the marks 62 used for positioning in relation to the side wall plate 51. The pair of marks 62 is in an extending line orthogonal to the positioning mark 56 and 57 and coincides with a lower edge of an outer surface of the side wall plate 51. The positioning marks 56 and 57 and the marks 58 through 62 are mark-off lines drawn with a scriber, and are brightly illuminated by receiving light from the illumination light 25.

An inner plate 63 having the opening 54 is located inner than the pair of the marks 62 on the plate member 52. An outer plate 64 is located outer than the pair of the marks 62. The positioning marks 56 and 57 are formed across a border between the inner plate 63 and the outer plate 64. In particular, the positioning marks 56 and 57 on the outer plate 64 are illuminated by light passing through a plate member 52, but not by light directly received from the illumination light 25, which prevents the positioning marks 56 and 57 from being illuminated excessively.

The second embodiment according to the present disclosure offers the same operational effects as (1) to (4), (6), and (7) of the first embodiment. By forming the opening in the plate member, the number of components used for the plate member is reduced to one, which results in reducing the total number of components used. Because of the gap G formed between the internal edge 55 of the plate member 52 and the photographing area E, even when the illumination light 25 illuminates the photographing area E, the possible reflection of light from the illumination light 25 against the internal edge 55 does not affect the photographing area E. Therefore, the camera appropriately photographs the woven fabric W without being affected by the reflection of light against the internal edge 55.

The embodiments disclosed herein are illustrative and not limited to the embodiments described above in every respect. The scope of the present disclosure is defined by the claims rather than the above description, and is intended to include any modifications equivalent in meaning and scope to the claims.
- According to the first and the second embodiments, the plate member is made from transparent materials. However, the scope of the present disclosure is not limited to the embodiments described above. The plate member may be made from non-transparent materials. In this case, the camera main body appropriately photographs the woven fabric W by aligning the weaving-resuming weft thread with the positioning mark in a line, although it is difficult to confirm that the positioning mark coincides with the weaving-resuming weft thread. In this way, the woven fabric W is appropriately photographed without checking the photographed image, which reduces time for inspecting the stop mark, i.e., raises the efficiency in the stop-mark inspection.
- According to the first and second embodiments of the present disclosure, the positioning marks are mark-off lines, but the scope of the present disclosure is not limited to the embodiments described above. The positioning mark may be a line drawn by, for example, a permanent marker, or may be a three-dimensional mark such as a needle and a ridge. According to the first and second embodiments of the present disclosure, the colored portion is formed to the weaving-resuming weft thread. However, the colored portion may not be formed when the weaving-resuming weft thread is visible and identifiable by other device.
- According to the first and second embodiments of the present disclosure, the positioning marks are formed at positions depending on the type of the stop mark. However, the scope of the present disclosure is not limited to the embodiments described above. The positioning mark may be a single one regardless of the type of the stop mark.
- According to the first and second embodiments of the present disclosure, the photographing area is set in such a manner that the plate member does not cover the woven fabric. However, the scope of the present disclosure is not limited to the embodiments described above. The photographing area may be set in such a manner that a transparent plate member covers the woven fabric. In this case, the camera main body photographs the woven fabric in the photographing area through the transparent plate member.
- According to the first embodiment of the present disclosure, a pair of the plate member is provided at the bottom of the support frame. However, only one of the plate member may be provided to the bottom of the support frame.

The stop-mark inspection apparatus (17, 50) for a loom (10) includes a camera device (18) having a camera main body (19) photographing a woven fabric (W), and is configured to inspect for presence or absence of a stop mark in the woven fabric (W) through image analysis of a photographed image. The camera device (18) is placeable on a surface of the woven fabric (W), and includes a support frame (20) supporting the camera main body (19), an illumination light (25) adjusting illuminance of a photographing area (E) of the camera main body (19), and a plate member (35, 52) provided at a bottom of the support frame (20) so that the plate member (35, 52) is contactable with the surface of the woven fabric (W). The plate member (35, 52) includes a positioning mark (42, 43, 56, 57) extending in a transverse direction of the photographing area (E) of the camera main body (19).

## Claims

1. A stop-mark inspection apparatus (17, 50) for a loom (10), comprising:
a camera device (18) including a camera main body (19) photographing a woven fabric (W), the stop-mark inspection apparatus (17, 50) being configured to inspect for presence or absence of a stop mark in the woven fabric (W) through image analysis of a photographed image, **characterized in that**
the camera device (18) is placeable on a surface of the woven fabric (W),
the camera device (18) comprises:
a support frame (20) supporting the camera main body (19);
an illumination light (25) adjusting illuminance of a photographing area (E) of the camera main body (19); and
a plate member (35, 52) provided at a bottom of the support frame (20) so that the plate member (35, 52) is contactable with the surface of the woven fabric (W), and
the plate member (35, 52) includes a positioning mark (42, 44, 56, 57) extending in a transverse direction of the photographing area (E) of the camera main body (19).

2. The stop-mark inspection apparatus (17, 50) according to claim 1, **characterized in that** the plate member (35, 52) is made from a transparent material.

3. The stop-mark inspection apparatus (17, 50) according to claim 1 or 2, **characterized in that** the positioning mark (42, 44, 56, 57) is a mark-off line drawn on the plate member (35, 52).

4. The stop-mark inspection apparatus (17, 50) according to any one of claims 1 to 3, **characterized in that** a position of the positioning mark (42, 43, 56, 57) depends on a type of the stop mark.

5. The stop-mark inspection apparatus (17, 50) according to any one of claims 1 to 4, **characterized in that**
the plate member (35, 52) includes an internal edge (55) forming an opening (54) accommodating the photographing area (E), and
a gap (G) is formed between the internal edge (55) and the photographing area (E).

6. The stop-mark inspection apparatus (17, 50) according to any one of claims 1 to 4, **characterized in that** the plate member (35, 52) is provided to at least one of both sides of the bottom of the support frame (20) in a weft (Y) direction in the photographing area (E).
